Europäisches Patentamt

European Patent Office

Office européen des brevets

(11) Veröffentlichungsnummer: **0 362 743 B1**

(12) **EUROPÄISCHE PATENTSCHRIFT**

(45) Veröffentlichungstag der Patentschrift: **02.02.94**

(21) Anmeldenummer: **89118174.5**

(22) Anmeldetag: **30.09.89**

(51) Int. Cl.5: **C08F 4/685**, C08F 4/629, C08F 10/02

(54) **Verfahren zur Herstellung von Homopolymerisaten des Ethens sowie Copolymerisaten des Ethens mit höheren alpha-Monoolefinen mittels eines Ziegler-Katalysatorsystems.**

(30) Priorität: **07.10.88 DE 3834088**

(43) Veröffentlichungstag der Anmeldung:
**11.04.90 Patentblatt 90/15**

(45) Bekanntmachung des Hinweises auf die
Patenterteilung:
**02.02.94 Patentblatt 94/05**

(84) Benannte Vertragsstaaten:
**AT BE DE ES FR GB IT NL SE**

(56) Entgegenhaltungen:
**EP-A- 0 166 888**
**EP-A- 0 264 090**
**GB-A- 2 065 146**
**GB-A- 2 066 273**

(73) Patentinhaber: **BASF Aktiengesellschaft**
**Carl-Bosch-Strasse 38**
**D-67063 Ludwigshafen(DE)**

(72) Erfinder: **Saive, Roland, Dr.**
**Pfarrer-Friedrich-Strasse 44**
**D-6700 Ludwigshafen(DE)**
Erfinder: **Funk, Guido, Dr.**
**Duererstrasse 5**
**D-6520 Worms 1(DE)**
Erfinder: **Hemmerich, Rainer, Dr.**
**Veilchenweg 9**
**D-6718 Gruenstadt(DE)**

**Beschreibung**

Die vorliegende Erfindung betrifft ein Verfahren zum diskontinuierlichen und - insbesondere - kontinuierlichen Herstellen von Homopolymerisaten des Ethens sowie - insbesondere - Copolymerisaten des Ethens mit untergeordneten Mengen an $C_3$- bis $C_8$-, insbesondere $C_4$- bis $C_6$-$\alpha$-Monoolefinen durch Polymerisation des bzw. der Monomeren bei Temperaturen von 30 bis 200, insbesondere von 50 bis 125°C und Drücken von 0,1 bis 200, insbesondere von 5 bis 60 bar mittels eines Ziegler-Katalysatorsystems aus

(1) einer Übergangsmetall-Katalystorkomponente und

(2) einer Organoaluminium-Katalysatorkomponente der Formel $AlR_mX_{3-m}$, worin stehen

X für einen Rest OR, Chlor, Brom bzw. Wasserstoff, vorzugsweise einen Rest OR bzw. Chlor,

R für einen $C_1$- bis $C_{18}$-Kohlenwasserstoffrest, insbesondere einen Ci- bis $C_{12}$-Alkylrest, und vorzugsweise einen $C_2$- bis $C_8$-Alkylrest

m für eine Zahl von 1 bis 3, vorzugsweise eine Zahl von 2 bis 3, und

(3) einer Organohalogen-Katalysatorkomponente ( = Cokatalysator),

mit den Maßgaben, daß das Atomverhältnis Übergangsmetall aus der Katalysatorkomponente (1) : Aluminium aus der Katalysatorkomponente (2) im Bereich von 1:0,1 bis 1:500, vorzugsweise 1:0,2 bis 1:50, und das Molverhältnis Organoaluminium-Katalysatorkomponente (2) : Organohalogen-Katalysatorkomponente (3) im Bereich von 1 : 0,0001 bis 1 : 10, vorzugsweise 1 : 0,01 bis 1 : 0,8 liegt.

Polymerisationsverfahren dieser Art sind bekannt, wobei im gegebenen Zusammenhang z.B. als repräsentativ das in der DE-A-34 17 238 oder in der EP-A-312 876 beschriebene bzw. vorgeschlagene gelten kann.

Die genannte Verfahrensart hat - ebenso wie in Parallele zu setzende andere Verfahrensarten - zum Kernstück ein in besonderer Weise ausgestaltetes Ziegler-Katalysatorsystem.

Die Aufgabe, die der Erfindung zugrunde lag, bestand im Auffinden eines Katalysatorsystems, das die Herstellung eines Ethylenhomopolymeren oder eines Copolymeren des Ethylens mit $\alpha$-Olefinen mit gezielt einstellbarer Molmasse und Molmassenverteilung, ausgezeichneten morphologischen Eigenschaften, sowie äußerst hoher Ausbeute ermöglicht.

Eine weitere Aufgabe bestand darin, die technische Durchführbarkeit der Polymerisation unter Anwendung der üblichen Reaktortechnik zu gewährleisten.

Besonders bedeutsam war in diesem Zusammenhang die Erzielung einer hohen Ausbeute sowie einer ausgezeichneten Morphologie, weil hier der Stand der Technik, etwa charakterisiert durch die DE-A-34 17 238, Verbesserungen wünschenswert erscheinen ließ.

Es wurde gefunden, daß die gestellten Aufgaben gelöst werden können mit einem Katalysatorsystem, welches eine spezielle Übergangsmetall-Katalysatorkomponente (1) - die in bestimmter Weise hergestellt sein muß und die Übergangsmetalle Vanadium und Titan in bestimmter Form gemeinsam enthalten muß - aufweist.

Gegenstand der vorliegenden Erfindung ist dementsprechend ein Verfahren zum diskontinuierlichen und - insbesondere - kontinuierlichen Herstellen von Homopolymerisaten des Ethens sowie - insbesondere - Copolymerisaten des Ethens mit untergeordneten Mengen an $C_3$- bis $C_8$-, insbesondere $C_4$- bis $C_6$-$\alpha$-Monoolefinen, durch Polymerisation des bzw. der Monomeren bei Temperaturen von 30 bis 200, insbesondere von 50 bis 125°C und Drücken von 0,1 bis 200, insbesondere von 5 bis 60 bar mittels eines Ziegler-Katalysatorsystems aus

(1) einer Übergangsmetall-Katalysatorkomponente und

(2) einer Organoaluminium-Katalysatorkomponente der Formel $AlR_mX_{3-m}$, worin stehen

X für einen Rest OR, Chlor, Brom bzw. Wasserstoff, vorzugsweise einen Rest OR bzw. Chlor,

R für einen $C_1$- bis $C_{18}$-Kohlenwasserstoffrest, insbesondere einen $C_1$- bis $C_{12}$-Alkylrest und vorzugsweise einen $C_2$- bis $C_8$-Alkylrest, und

m für eine Zahl von 1 bis 3, vorzugsweise eine Zahl von 2 bis 3, und

(3) einer Organohalogen-Katalysatorkomponente ( = Cokatalysator),

mit den Maßgaben, daß das Atomverhältnis Übergangsmetall aus der Katalysatorkomponente (1) : Aluminium aus der Katalysatorkomponente (2) im Bereich von 1 : 0,1 bis 1 : 500, vorzugsweise 1 : 0,2 bis 1 : 50 und das Molverhältnis Organoaluminium-Katalysatorkomponente (2) : Organohalogen-Katalysatorkomponente (3) im Bereich von 1 : 0,001 bis 1 : 10, vorzugsweise 1 : 0,01 bis 1 : 0,8 liegt.

Das erfindungsgemäße Verfahren ist dadurch gekennzeichnet, daß eingesetzt wird als Übergangsmetall-Katalysatorkomponente (1) das festphasige Produkt (VI), das erhalten worden ist, indem man

(1.1) zunächst

(1.1.1) einen feinteiligen, porösen, anorganisch-oxidischen Stoff (I), der einen Teilchendurchmesser von 1 bis 1.000, vorzugsweise 1 bis 400 $\mu$m, ein Porenvolumen von 0,3 bis 3, vorzugsweise 1 bis 2,5 cm$^3$/g sowie eine Oberfläche von 100 bis 1.000, vorzugsweise 200 bis 400 m$^2$/g besitzt und die Formel $SiO_2 \bullet aAl_2O_3$ worin a steht für eine Zahl im Bereich von 0 bis 2, insbesondere 0 bis 0,5 - hat, und

(1.1.2) eine Lösung (II), wie sie sich ergibt beim Zusammenbringen von

(IIa) 100 Gew.-Teilen eines Oxakohlenwasserstoffs gesättigt aliphatischer oder teils gesättigt aliphatischer, teils aromatischer Natur, der 1 bis 2 Oxasauerstoffatome sowie mehr als 3 aber weniger als 19 Kohlenstoffatome aufweist, vorzugsweise eines Oxakohlenwasserstoffs gesättigt aliphatischer oder teils gesättigt aliphatischer, teils aromatischer Natur, der ein Oxasauerstoffatom sowie mehr als 3 aber weniger als 11 Kohlenstoffatome aufweist, insbesondere eines ringgeschlossenen Oxakohlenwasserstoffs gesättigt aliphatischer Natur, der ein Oxasauerstoffatom sowie 4 bis 6 Kohlenstoffatome aufweist, und vor allem Tetrahydrofuran, und

(IIb) 0,01 bis 50, vorzugsweise 1 bis 30 Gew.-Teilen eines Gemisches aus

(IIb1) 100 Molteilen eines Vanadiumtrihalogenid-Alkohol-Komplexes der Formel $VY_3 \bullet nZ-OH$, worin stehen Y für Chlor oder Brom, vorzugsweise Chlor, n für eine Zahl von 1 bis 6, vorzugsweise 3 bis 4, und Z für einen einwertigen, nicht mehr als 10, vorzugsweise nicht mehr als 8 Kohlenstoffatome aufweisenden Kohlenwasserstoffrest gesättigt-aliphatischer oder teils gesättigt-aliphatischer, teils aromatischer Natur, insbesondere einen nicht mehr als 6 Kohlenstoffatome aufweisenden Alkylrest,

(IIb2) 0,2 bis 200, vorzugsweise 0,5 bis 100 Molteilen eines Titantrihalogenids, wobei das Halogen Chlor und/oder Brom sein kann, vorzugsweise eines Titantrichlorids, oder eines Titantrihalogenid-Alkohol-Komplexes der Formel $TiY_3 \bullet nZ-OH$, worin stehen Y für Chlor oder Brom, vorzugsweise Chlor, n für eine Zahl von 1 bis 6, vorzugsweise 3 bis 4, und Z für einen einwertigen, nicht mehr als 10, vorzugsweise nicht mehr als 8 Kohlenstoffatomen aufweisenden Kohlenwasserstoffrest gesättigt-aliphatischer oder teils gesättigt-aliphatischer, teils aromatischer Natur, insbesondere einen nicht mehr als 4 Kohlenstoffatome aufweisenden Alkylrest, sowie

(IIc) 1 bis 200, vorzugsweise 1 bis 100 Gew.-Teilen einer Verbindung des Typs $BX_nY_mR_p$ oder $SiX_nY_mR_q$, worin X steht für einen Rest OR, Y für Chlor, Brom oder Wasserstoff und R für einen $C_1$- bis $C_{18}$-Kohlenwasserstoffrest mit der Maßgabe, daß $n > 0$ und $n+m+p = 3$ oder $n+m+q = 4$ sein soll, vorzugsweise einer Verbindung des Typs $SiX_nR_q$, worin X steht für einen Rest OR und R für einen $C_1$- bis $C_{18}$-Kohlenwasserstoffrest aliphatischer oder aromatischer Natur, wobei $n > 0$ und $n+q = 4$ sein soll, besonders bevorzugt einer Verbindung, in der $n > 1$ und R ein Kohlenwasserstoffrest mit 1 bis 10 Kohlenstoffatomen ist, miteinander in Berührung bringt unter Bildung einer Suspension (III), mit der Maßgabe, daß das Gewichtsverhältnis anorganisch-oxidischer Stoff (I) : Übergangsmetall-Komposition (IIb) im Bereich von 1 : 0,01 bis 1 : 2, vorzugsweise von 1 : 0,2 bis 1 : 1,5 liegt, die Suspension (III) bei einer Temperatur, die unterhalb von 200, vorzugsweise von 160°C und oberhalb des Schmelzpunkts des verwendeten Oxakohlenwasserstoffs (IIa) liegt, bis zur trockenen Konsistenz unter Bildung eines festphasigen Zwischenprodukts (IV) eindampft, und

(1.2) dann

(1.2.1) das aus Stufe (1.1) erhaltene festphasige Zwischenprodukt (IV) und

(1.2.2) eine in einem organischen Lösungsmittel gelöste Aluminiumverbindung (V) der Formel $AlR_mX_{3-m}$, worin stehen

X für einen Rest OR, Chlor, Brom bzw. Wasserstoff, vorzugsweise einen Rest OR bzw. Chlor,

R für einen $C_1$- bis $C_{18}$-Kohlenwasserstoffrest, insbesondere einen $C_1$- bis $C_{12}$-Alkylrest, und vorzugsweise einen $C_2$- bis $C_8$-Alkylrest, und

m für eine zahl von 1 bis 3, vorzugsweise die Zahl 2,

miteinander in Berührung bringt unter Bildung einer Suspension, mit der Maßgabe, daß das Gewichtsverhältnis festphasiges Zwischenprodukt (IV) : Aluminiumverbindung (V) im Bereich von 1 : 0,05 bis 1 : 2, vorzugsweise 1 : 0,1 bis 1 : 1 liegt, wobei das dabei als Suspendiertes resultierende festphasige Produkt (VI) die Übergangsmetall-Katalysatorkomponente (I) ist.

Zu dem erfindungsgemäßen Verfahren ist erläuternd das folgende zu bemerken:

Das Polymerisationsverfahren als solches kann, unter Beachtung der kennzeichnenden Besonderheiten, in praktisch allen einschlägig üblichen technologischen Ausgestaltungen durchgeführt werden, etwa als Suspensions-Polymerisationsverfahren oder Trockenphasen-Polymerisationsverfahren. Die erwähnten technologischen Ausgestaltungen, mit anderen Worten: die technologischen Varianten der Polymerisation von Olefinen nach Ziegler, sind aus der Literatur und Praxis wohlbekannt, so daß sich nähere Ausführungen zu ihnen erübrigen. Zu bemerken ist allenfalls noch, daß beim erfindungsgemäßen Verfahren die Komponenten des Katalysatorsystems in mannigfacher Weise in den Polymerisationsraum eingebracht werden können, z.B. (i) die übergangsmetallkomponente (1), die Organoaluminiumkomponente (2) sowie die Organohalogenkomponente (3) alle örtlich gemeinsam, (ii) die übergangsmetallkomponente (1) einerseits und ein Gemisch aus (2) und (3) andererseits örtlich getrennt voneinander - was von besonderem Vorteil sein kann - oder (iiii) ein Gemisch aus der Übergangsmetallkomponente (1) und der Organohalogenkomponente (3) einerseits, und die Organoaluminiumkomponente (2) andererseits örtlich getrennt voneinander.

Das neue Verfahren - das vorzugsweise kontinuierlich durchgeführt wird - eignet sich zum Herstellen von Homopolymerisaten des Ethens, vornehmlich aber von Copolymerisaten des Ethens mit untergeordne-ten Mengen an $C_3$- bis $C_8$-, insbesondere $C_4$- bis $C_6$-$\alpha$-Monoolefinen; wobei letztere in Form von Einzelindividuen oder in Form von Gemischen aus zwei oder mehr Einzelindividuen vorliegen können. Zur Copolymerisation geeignete $\alpha$-Monoolefine sind vor allem die unverzweigten, wie Propen, n-Buten-1, n-Pentan-1, n-Hexen-1, n-Hepten-1 und n-Octen-1, wobei wiederum mit n-Buten-1 sowie n-Hexen-1 (oder Gemischen aus diesen beiden $\alpha$-Monoolefinen) die am besten zu bewertenden Polymerisate erhältlich sind, insbesonderes solche, die auf 100 Moleinheiten Ethen 0,1 bis 10 Moleinheiten des höheren $\alpha$-Monoolefins bzw. der höheren a-Monoolefine einpolymerisiert enthalten.

Was die Molekulargewichte der Polymerisate betrifft, so kann deren Regelung in einschlägig üblicher Weise erfolgen, insbesondere mittels Wasserstoff als Regulans.

Zu der beim erfindungsgemäßen Verfahren einzusetzenden Übergangsmetall-Katalysatorkomponente (1) ist im einzelnen das Folgende zu sagen:

Ihre Herstellung erfolgt in zwei Stufen, die oben sowie nachstehend mit (1.1) und (1.2) bezeichnet sind.

In Stufe (1.1) bringt man einen feinteiligen anorganisch-oxidischen Stoff (I) der oben definierten Art und eine bestimmte, oben definierte Lösung (II) miteinander in Berührung, wobei sich eine Suspension (III) bildet, die bis zur trockenen Konsistenz - Bildung eines festphasigen Zwischenprodukts (IV) - eingedampft wird. In Stufe (1.2) wird letzteres mit einer Lösung einer bestimmten, oben definierten Aluminiumverbindung (V) in Berührung gebracht unter neuerlicher Bildung einer Suspension, - wobei das dabei als Suspendiertes resultierende festphasige Produkt (VI) die neue Katalysatorkomponente (1) ist.

Im einzelnen kann man dabei wie folgt verfahren:

Stufe (1.1)

Der anorganisch-oxidische Stoff (I) wird in Substanz oder in einem Oxakohlenwasserstoff suspendiert (zweckmäßigerweise einem Oxakohlenwasserstoff wie er unter (IIa) definiert ist und mit einem Feststoffgehalt der Suspension von nicht weniger als 5 Gew.-%) mit der Lösung (II) vereinigt und danach die gebildete Suspension (III) eingedampft.

Das Herstellen der Lösung (II) selbst kann so erfolgen, wie man üblicherweise Lösungen herstellt und ist insoweit nicht mit Besonderheiten verbunden.

Als abschließende Maßnahme bei Stufe (1.1) wird die Suspension (III) bis zur trockenen Konsistenz eingedampft, wobei das festphasige Zwischenprodukt (IV) erhalten wird. Hierbei kann man - unter Einhaltung der oben gegebenen Temperaturbedingungen - so verfahren, wie man üblicherweise Suspensionen schonend eindampft. Dies bedeutet, daß es im allgemeinen zweckmäßig - und bei relativ hohen Oxakohlenwasserstoffen (IIa) u.U. unerläßlich - ist, das Eindampfen unter mehr oder minder stark erniedrigtem Druck vorzunehmen. Als Faustregel gilt, daß man das Paar Temperatur/Druck so wählen sollte, daß der Eindampfvorgang nach etwa 1 bis 10 Stunden beendet ist. Zweckmäßig ist es auch, das Eindampfen unter steter Wahrung der Homogenität des behandelten Gutes vorzunehmen; - wofür sich z.B. Rotationsverdampfer bewährt haben. Eine verbleibende Restmenge an Oxakohlenwasserstoff, etwa eine durch Komplexbildung gebundene Menge, ist für das festphasige Zwischenprodukt (IV) im allgemeinen ohne Schaden.

Stufe (1.2)

Man bereitet zunächst in getrennten Ansätzen eine 0,1- bis 50-, vorzugsweise etwa 25-gew.-%ige Suspension des festphasigen Zwischenprodukts (IV) sowie eine 5- bis 80-, vorzugsweise etwa 20 gew.-%ige Lösung der Aluminiumverbindung (V), wobei als Suspensions- bzw. Lösungsmittel, insbesondere Kohlenwasserstoffe, vor allem relativ leichtsiedende Alkan-Kohlenwasserstoffe, wie Hexane, Heptane oder Benzine, in Betracht kommen. Danach vereinigt man die Suspension und die Lösung in solchen Mengenverhältnissen, daß das gewünschte Gewichtsverhältnis erreicht wird. Zur Vereinigung wird man im allgemeinen die Lösung in die Suspension unter Rühren einbringen, denn diese Verfahrensweise ist praktischer als die - ebenfalls mögliche - umgekehrte. Bei Temperaturen von -25 bis 120 °C, insbesondere bei Temperaturen von 25 bis 80 °C, ist innerhalb einer Zeitspanne von 15 bis 600 Minuten, insbesondere 60 bis 300 Minuten, die Bildung des - als Suspendiertes vorliegenden - festphasigen Produktes (VI) erfolgt.

Dieses kann zweckmäßigerweise unmittelbar in Form der erhaltenen Suspension - gegebenenfalls nach einer Wäsche mittels Digerieren oder Filtrieren - als Übergangsmetall-Katalysatorkomponente (1) verwendet werden. Falls gewünscht, ist es aber auch möglich, das festphasige Produkt (VI) zu isolieren und dann erst als Katalysatorkomponente (I) einzusetzen; - wobei sich zum Isolieren z.B. der folgende Weg anbietet: Man trennt das Produkt (VI) von der flüssigen Phase mittels Filtration und wäscht es mit reiner Flüssigkeit (etwa der Art, die man auch als Suspensions- bzw. Lösungsmittel verwendet hatte), worauf man es trocknet, etwa im Vakuum.

Was die stoffliche Seite der Übergangsmetall-Katalysatorkomponenten (I) betrifft, ist im einzelnen noch das Folgende zu sagen:

Der in Stufe (1.1) einzusetzende anorganisch-oxidische Stoff (I) wird im allgemeinen ein Alumosilikat oder - insbesondere - ein Siliciumdioxid sein; wichtig ist, daß er die geforderten Eigenschaften besitzt. - Wie sich gezeigt hat, sind die der gegebenen Spezifikation entsprechenden im Handel erhältlichen einschlägig üblichen Trägerstoffe gut geeignet.

Das zu verwendende Lösungsmittel (IIa) ist ein Oxakohlenwasserstoff gesättigt aliphatischer oder teils gesättigt aliphatischer, teils aromatischer Natur, der 1 bis 2 Oxasauerstoffatome sowie mehr als 3, aber weniger als 19 Kohlenstoffatome aufweist, vorzugsweise ein Oxakohlenwasserstoff gesättigt aliphatischer oder teils gesättigt aliphatischer, teils aromatischer Natur, der 1 Oxasauerstoffatom sowie mehr als 3, aber weniger als 11 Kohlenstoffatome aufweist, insbesondere ein ringgeschlossener Oxakohlenwasserstoff gesättigt aliphatischer Natur, der 1 Oxasauerstoffatom sowie 4 bis 6 Kohlenstoffatome aufweist, und vor allem Tetrahydrofuran. Außer dem letztgenannten eignen sich - unter Beachtung der oben wiedergegebenen Rangfolge - als Oxakohlenwasserstoffe weiterhin z.B. Ethylenglykoldimethylether, Anisol, Tetrahydropyran und Dioxan. Die Oxakohlenwasserstoffe können eingesetzt werden in Form von Einzelindividuen sowie Gemischen aus zwei oder mehr Einzelindividuen.

Der einzusetzende Vanadiumtrihalogenid-Alkohol-Komplex (IIb[1]) hat die Formel $VY_3 \cdot nZ\text{-}OH$, worin stehen Y für Chlor oder Brom, vorzugsweise Chlor, n für eine Zahl von 1 bis 6, vorzugsweise 3 bis 4, und Z für einen einwertigen, nicht mehr als 10, vorzugsweise nicht mehr als 8 Kohlenstoffatome aufweisenden Kohlenwasserstoffrest gesättigt-aliphatischer oder teils gesättigt-aliphatischer, teils aromatischer Natur, insbesondere einen nicht mehr als 6 Kohlenstoffatome aufweisenden Alkylrest. Dabei kann das zugrunde liegende Vanadiumtrihalogenid ein bei Ziegler-Katalysatorsystemen übliches sein. Als alkoholische Komponente eignen sich - unter Wahrung der oben wiedergegebenen Rangfolge - z.B. Methanol, Ethanol, Propanol-2, Butanol-2 und 2-Methylbutanol-2. Die Komplexe können - z.B. zweckmäßigerweise in situ, etwa aus Vanadiumtrichlorid und Propanol-2 in Tetrahydrofuran als Lösungsmittel - nach üblichen Methoden hergestellt sein, z.B. nach D.C. Bradley, H.L. Kehta, Can. J. Chem. 40 (1962), 1710/3; auch sie können eingesetzt werden in Form von Einzelindividuen sowie Gemischen aus zwei oder mehr Einzelindividuen.

Das einzusetzende Titantrihalogenid (IIB2) kann wiederum ein bei Ziegler-Katalysatorsystemen übliches sein, z.B. ein bei der Reduktion eines Titantetrahalogenids mittels Wasserstoff, Aluminium oder aluminiumorganischen Verbindungen erhaltenes Reaktionsprodukt. Als besonders gut geeignet haben sich erwiesen z.B. Trichloride der Formel $TiCl_3$, wie sie bei der Reduktion von Titantetrachlorid mittels Wasserstoff anfallen sowie Trichloride der Formel $TiCl_3 \cdot 1/3\ AlCl_3$, wie sie bei der Reduktion von Titantetrachlorid mittels metallischem Aluminium anfallen. Wahlweise kann ein Titantrihalogenid-Alkohol-Komplex der eingangs definierten Art eingesetzt werden; - für ihn gilt im übrigen sinngemäß das gleiche wie für den Vanadiumtrihalogenid-Alkohol-Komplex (IIb1). Die Titantrihalogenide und Titantrichlorid-Alkohol-Komplexe können eingesetzt werden in Form von Einzelindividuen sowie Gemische aus zwei oder mehr Einzelindividuen.

Die unter (IIc) einzusetzende Silizium- oder Borverbindung hat die Formel $BX_nY_mR_p$ oder $SiX_nY_mR_q$, worin X steht für einen Rest OR; Y für Chlor, Brom oder Wasserstoff und R für einen $C_1$- bis $C_{18}$-Kohlenwasserstoffrest mit der Maßgabe, daß $n > 0$ und $n+m+p = 3$ oder $n+m+q = 4$ sein soll, vorzugsweise die Formel $SiX_nR_q$, worin X steht für einen Rest OR und R für einen $C_1$- bis $C_{18}$-Kohlenwasserstoffrest aliphatischer oder aromatischer Natur, wobei $n > 0$ und $n+q = 4$ sein soll, besonders bevorzugt eine Formel $SiX_nR_q$ in der $n > 1$, $n+q = 4$ und R ein Kohlenwasserstoffrest mit 1 bis 10 Kohlenstoffatomen ist; es eignen sich unter Wahrung der oben wiedergegebenen Rangfolge z.B. Triisopropylborat, Tetrabutylsilikat, Toluyltriethoxysilan, Phenyltriethoxysilan und Dimethyldiethoxysilan; geeignet sind ebenfalls Gemische derartiger Verbindungen.

Die in Stufe (1.2) einzusetzende Aluminiumverbindung (V) kann z.B. eine Verbindung sein wie sie repräsentiert wird durch die Formeln $Al(C_2H_5)_3$, $Al(C_2H_5)_2Cl$, $Al(C_2H_5)_2Br$, $Al(C_2H_5)_{1,5}Cl_{1,5}$, $Al(C_2H_5)_{1,5}Br_{1,5}$, $Al(C_2H_5)Cl_2$, $Al(C_2H_5)Br_2$, $Al(C_4H_9)_3$, $Al(C_4H_9)_2Cl$, $Al(C_4H_9)Cl_2$, $Al(C_2H_5)_2H$, $Al(C_4H_9)_2H$, $Al(C_3H_7)_2(OC_3H_7)$

oder $Al(C_2H_5)_{1,5}(OC_2H_5)_{1,5}$ sowie Isoprenylaluminium. Wie sich gezeigt hat, sind besonders gut geeignet Aluminiumverbindungen der Formeln $C_2H_5AlCl_2$, $(C_2H_5)_2AlCl$ sowie Isoprenylaluminium. Die Aluminiumverbindungen (V) können eingesetzt werden in Form von Einzelindividuen sowie Gemischen aus zwei oder mehr Einzelindividuen.

Die Organoaluminium-Katalysatorkomponente (2) betreffend ist zu sagen, daß sich hierfür die einschlägig üblichen Verbindungen eignen; als geeignet Individuen sind z.B. zu nennen solche der Formeln $Al(C_2H_5)_3$, $Al(i-C_4H_9)_3$, $Al(n-C_4H_9)_3$, $Al(C_8H_{17})_3$ sowie Isoprenylaluminium.

Als Organohalogen-Katalysatorkomponente (3) schließlich kann zweckmäßigerweise eine Verbindung aus den folgenden Verbindungsklassen eingesetzt werden:

(A) Gesättigte aliphatische Halogenkohlenwasserstoffe; wobei geeignete Individuen sind solche der Formeln $CCl_4$, $CHCl_3$, $CH_2Cl_2$ $CBr_4$, $CHBR_3$, $CFCl_3$, $CF_2Cl_2$ undc $CF_3Cl$. Davon besonders geeignet sind $CCl_4$, $CHCl_3$, $CH_2Cl_2$ und $CF_2Cl_2$. Herausragend gut geeignet ist $CFCl_3$.

(B) Olefinisch ungesättigte aliphatische Halogenkohlenwasserstoffe; wobei geeignete Individuen sind solche der Formeln $CH_2=CHCl$, $CH_2=CCl_2$, $CHCl=CCl_2$, $Cl_2C=CCl_2$, $CH_2=CH-CH_2Cl$, $CCl_2=CCl-CCl_3$, $CH_2=CHBr$ und $CH_2=CH-CH_2Br$. Davon besonders geeignet sind $CH_2=CHCl$, $CH_2=CCl_2$ und $CH_2=CHBr$. Herausragend gut geeignet sind $CH_2=CH-CH_2Cl$, $CCl_2=CCl-CCl_3$ und $CH_2=CH-CH_2Br$.

(C) Acetylenisch ungesättigte aliphatische Halogenkohlenwasserstoffe; wobei geeignete Individuen sind solche der Formeln $CH\equiv C-CH_2Cl$, $CH\equiv C-CH_2Br$, $CH_3-C\equiv C-CH_2Cl$, $CH_3-C\equiv C-CH_2Br$, $C_2H_5-C\equiv C-CH_2Cl$ und $C_{25}-C\equiv C-CH_2Br$. Davon besonders geeignet sind $CH_3-C\equiv C-CH_2Cl$ und $CH_3C\equiv C-CH_2Br$. Herausragend gut geeignet sind $CH\equiv C-CH_2Cl$ und $CH\equiv C-CH_2Br$.

(D) Aromatische Halogenkohlenwasserstoffe; wobei geeignete Individuen sind $\alpha$-Chlortoluol, $\alpha,\alpha$-Dichlortoluol, $\alpha,\alpha,\alpha$-Trichlortoluol, Diphenylchlormethan, Diphenyldichlormethan, Triphenylchlormethan, $\alpha$-Bromtoluol, $\alpha,\alpha$-Dibromtoluol und $\alpha,\alpha,\alpha$-Tribromtoluol. Davon besonders geeignet ist Bromtoluol. Herausragend gut geeignet sind $\alpha$-Chlortoluol, $\alpha,\alpha$-Dichlortoluol und $\alpha,\alpha,\alpha$-Trichlortoluol.

(E) Gesättigte aliphatische halogenierte Ketone, Carbonsäurechloride und Carbonsäureester; wobei geeignete Individuen sind Hexachloraceton, Monochloracetylchlorid, Dichloracetylchlorid, Trichloracetylchlorid, Monobromacetylbromid, Methylmonochloracetat, Methyldichloracetat und Methyltrichloracetat. Hiervon sind zu bevorzugen Dichloracetylchlorid, Trichloracetylchlorid, Methyltrichloracetat und insbesondere Hexachloraceton, Monochloracetylchlorid sowie Methylmonochloracetat.

(F) Olefinisch ungesättigte aliphatische halogenierte Ketone, Carbonsäurechloride und Carbonsäureester; wobei geeignete Individuen sind Chlormethylvinylketon, Trichlormethylvinylketon, 1-Chloracrylsäurechlorid, 2,3,4,4-Tetrachlorbuten-2-säuremethylester, 2,3,4,4-Tetrachlorbuten-2-säureethylester, 2,3,4,4-Tetrachlorbuten-2-säure-n-butylester, Methylperchlorcrotonat und EThylperchlorcrotonat. Davon sind hervorzuheben Chlormethylvinylketon, Trichlormethylvinylketon, Methylperchlorcrotonat und 2,3,4,4-Tetrachlorbuten-2-säure-n-butylester.

(G) Aromatische halogenierte Carbonsäurechloride und Carbonsäureester; wobei geeignete Individuen sind $\alpha$-Chlorphenylacetylchlorid, Methyl-$\alpha$-Chlorphenylacetat, Ethyl-$\alpha$-chlorphenylacetat, Methyl-$\alpha,\alpha$-dichlorphenylacetat und Ethyl-$\alpha,\alpha$-dichlorphenylacetat. Davon sind hervorzuheben $\alpha$-Chlorphenylacetylchlorid, Methyl-$\alpha$-chlorphenylacetat und Methyl-$\alpha,\alpha$-dichlorphenylacetat.

Wie sich gezeigt hat, sind von den genannten Verbindungsklassen für den erfindungsgemäßen Zweck am besten geeignet Verbindungen der Klassen (A), (B), (C) sowie (D), gefolgt von (E) und schließlich (F) sowie (G). Die betroffenen Verbindungen können eingesetzt werden in Form von Einzelindividuen sowie Gemischen aus zwei oder mehr Einzelindividuen.

Beispiel

Herstellung der Übergangsmetall-Katalysatorkomponente (1):

Stufe (1.1)

Es wurde ausgegangen von (1.1.1) 16 Gew.-Teilen Siliciumdioxid ($SiO_2$, Teilchendurchmesser 20 bis 45 $\mu$m Porenvolumen: 1,7 $cm^3$/g, Oberfläche; 320 $m^2$/g) sowie (1.1.2) einer Lösung aus 100 Gew.-Teilen Tetrahydrofuran und 19 Gew.-Teilen einer Übergangsmetall-Komposition, bestehend aus 100 Mol-Teilen eines Vanadiumtrihalogenid-Alkohol-Komplexes der Formel $VCl_3 \cdot 4ZOH$, worin Z steht für einen iso-Propylrest und 5 Molteilen eines Titantrihalogenid-Alkohol-Komplexes der Formel $TiCl_3 \cdot l/3\ AlCl_3 \cdot 4C_3H_7OH$ sowie 14 Gew.-Teilen $Si(OC_4H_9)_4$. Diese zwei Komponenten wurden vereinigt und die dabei erhaltene Suspension kurz gerührt. Anschließend wurde das gebildete festphasige Zwischenprodukt (IV) isoliert durch Abtreiben der flüchtigen Bestandteile in einem Rotationsverdampfer, der bis zu einem Betriebsdruck von 10 mbar und einer Betriebstemperatur von 70°C gebracht wurde.

Stufe (1.2)

20 Gew.-Teile des in Stufe (1.1) gewonnenen festphasigen Zwischenprodukts (IV) wurden in 103 Gew.-Teilen n-Heptan suspendiert, worauf diese Suspension mit einer Lösung aus 7,2 Gew.-Teilen Diethylaluminiumchlorid in 17 Gew.-Teilen n-Heptan versetzt und die daraus resultierende Suspension kurz bei 65°C gerührt wurde. Anschließend wurde filtriert, dreimal mit n-Heptan gewaschen und im Vakuum getrocknet. Das erhaltene festphasige Produkt (VI) bildet die Katalysatorkomponente (1).

Polymerisation:

Ein 10 l Autoklav wurde mit 5 l i-Butan, 0,1 l Buten-1, 8 l $H_2$-Gas, 0,111 g der Katalysatorkomponente (1), 5 mmol Tri-i-butylaluminium als Katalysatorkomponente (2) und 2 mmol Trichlorfluormethan als Organohalogen-Katalysatorkomponente (3) beschickt.

Sodann wurde unter Rühren und bei den - jeweils durch Regelung konstant gehaltenen - Parametern Ethenpartialdruck: 16,5 bar, Temperatur: 80°C, über eine Zeitspanne von 90 min. polymerisiert; danach wurde die Polymerisation durch Entspannen abgebrochen.

Nähere Angaben zu dem erhaltenen Copolymerisat finden sind in der Tabelle.

Vergleichsversuch

Herstellung der Übergangsmetall-Katalysatorkomponente (1):

Stufe (1.1)

Es wurde ausgegangen von (1.1.1) 16 Gewichtsteilen Siliciumdioxid ($SiO_2$, Teilchendurchmesser 20 bis 45 µm Porenvolumen: 1,7 $cm^3$/g, Oberfläche; 320 $m^2$/g) sowie (1.1.2) einer Lösung aus 100 Gewichtsteilen Tetrahydrofuran und 19 Gewichtsteilen einer Übergangsmetall-Komposition, bestehend aus 100 Molteilen eines Vanadiumtrihalogenid-Alkohol-Komplexes der Formel $VCl_3 \cdot 4ZOH$, worin Z steht für einen iso-Propylrest und 5 Molteilen eines Titantrihalogenid-Alkohol-Komplexes der Formel $TiCl_3 \cdot l/3\ AlCl_3 \cdot 4C_3H_7OH$. Diese zwei Komponenten wurden vereinigt und die dabei erhaltene Suspension kurz gerührt. Anschließend wurde das gebildete festphasige Zwischenprodukt (IV) isoliert durch Abtreiben der flüchtigen Bestandteile in einem Rotationsverdampfer, der bis zu einem Betriebsdruck von 10 mbar und einer Betriebstemperatur von 70°C gebracht wurde.

Stufe (1.2)

20 Gewichtsteile des in Stufe (1.1) gewonnenen festphasigen Zwischenprodukts (IV) wurden in 103 Gewichtsteilen n-Heptan suspendiert, worauf diese Suspension mit einer Lösung aus 7,2 Gewichtsteilen Diethylaluminiumchlorid in 17 Gewichtsteilen n-Heptan versetzt und die daraus resultierende Suspension kurz bei 65°C gerührt wurde. Anschließend wurde filtriert, drei mal mit n-Heptan gewaschen und im Vakuum getrocknet. Die Analyse des erhaltenen festphasigen Produktes (VI) bildet die Katalysatorkomponente (1).

Polymerisation:

Die Polymerisation wurde durchgeführt wie in Beispiel 1 mit der einzigen Ausnahme, daß statt der erfindungsgemäßen Übergangsmetall-Katalysatorkomponente (1) 0,179 g der vorstehend beschriebenen Übergangsmetall-Katalysatorkomponente (1) eingesetzt wurde.

Nähere Angaben zu dem erhaltenen Copolymerisat finden sich in der Tabelle.

EP 0 362 743 B1

Tabelle

| | Ausbeute | | HLMI[1] | [η][2] | Dichte[3] | SD | Siebanalyse[4] [mm] | | [Gew.-%] | |
|---|---|---|---|---|---|---|---|---|---|---|
| | [g] | [g/g Kat.Komp.(1)] | [g/10 min] | [dl/g] | [g/cm³] | [g/l] | <0,5 | 0,5-1,0 | 1,0-2,0 | >2,0 |
| Beispiel | 1370 | 12 340 | 12 | 3,42 | 0,946 | 405 | 0,3 | 50,3 | 49,2 | 0,2 |
| Vergl.Ver. | 1230 | 6 870 | 16 | 3,30 | 0,948 | 414 | 1,3 | 79,3 | 17,8 | 1,6 |

[1] Bestimmt gemäß DIN 53 735, 190°C , 21,6 Kp Belastung

[2] Bestimmt gemäß DIN 53 728

[3] Gemäß DIN 53 479

[4] Gemäß DIn 53 477

Das Beispiel zeigt, daß gegenüber dem Stand der Technik, repräsentiert durch die DE-A-34 17 238, die Produktivität des Katalysatorsystems überaus stark zunimmt.

Darüberhinaus wird eine Vereinheitlichung der Polymerisatkorngröße erzielt, wie sowohl aus dem verminderten Feinanteil <0,5 nm als auch aus dem verminderten Grobanteil >2 mm ersichtlich ist.

Die günstige Kombination von hoher Molmasse, gemessen durch die Lösungsviskosität [η] und guter Fließfähigkeit, gemessen durch den HLMI, bleibt uneingeschränkt erhalten.

**Patentansprüche**

1. Verfahren zum Herstellen von Homopolymerisaten des Ethens sowie Copolymerisaten des Ethens mit untergeordneten Mengen an $C_3$- bis $C_8$-$\alpha$-Monoolefinen durch Polymerisation des bzw. der Monomeren bei Temperaturen von 30 bis 200°C und Drücken von 0,1 bis 200 bar mittels eines Ziegler-Katalysatorsystems aus

(1) einer übergangsmetall-Katalysatorkomponente und

(2) einer Organoaluminium-Katalysatorkomponente der Formel $AlR_mX_{3-m}$, worin stehen

X für einen Rest OR, Chlor, Brom bzw. Wasserstoff

R für einen $C_1$- bis $C_{18}$-Kohlenwasserstoffrest, und

m für eine Zahl von 1 bis 3,

und

(3) einer Organohalogen-Katalysatorkomponente

mit den Maßgaben, daß das Atomverhältnis Übergangsmetall aus der Katalysatorkomponente (1) : Aluminium aus der Katalysatorkomponente (2) im Bereich von 1:0,1 bis 1:500 und das Molverhältnis Organoaluminium-Katalysatorkomponente (2) : Organohalogen-Katalysatorkomponente (3) im Bereich von 1 : 0,0001 bis 1 : 10 liegt,

dadurch gekennzeichnet, daß eingesetzt wird

als Übergangsmetall-Katalysatorkomponente (1) das festphasige Produkt (VI), das erhalten worden ist, indem man

(1.1) zunächst

(1.1.1) einen feinteiligen, porösen, anorganisch-oxidischen Stoff (1), der einen Teilchendurchmesser von 1 bis 1.000 $\mu m$, ein Porenvolumen von 0,3 bis 3 $cm^3/g$ sowie eine Oberfläche von 100 bis 1.000 $m^2/g$ besitzt und die Formel $SiO_2 \cdot aAl_2O_3$ - worin a steht für eine Zahl im Bereich von 0 bis 2 - hat, und

(1.1.2) eine Lösung (II), wie sie sich ergibt beim Zusammenbringen von

(IIa) 100 Gew.-Teilen eines Oxakohlenwasserstoffs gesättigt aliphatischer oder teils gesättigt aliphatischer, teils aromatischer Natur, der 1 bis 2 Oxasauerstoffatome sowie mehr als 3 aber weniger als 19 Kohlenstoffatome aufweist, und

(IIb) 0,01 bis 50 Gew.-Teilen eines Gemischs aus

(IIb1) 100 Molteilen eines eines Vanadiumtrihalogenid-Alkohol-Komplexes der Formel $VY_3 \cdot nZ$-OH, worin stehen Y für Chlor oder Brom, n für eine Zahl von 1 bis 6 und Z für einen einwertigen, nicht mehr als 10 Kohlenstoffatome aufweisenden Kohlenwasserstoffrest gesättigt-aliphatischer oder teils gesättigt-aliphatischer, teils aromatischer Natur,

(IIb2) 0,2 bis 200 Molteilen eines Titantrihalogenids, wobei das Halogen Chlor und/oder Brom sein kann oder eines Titantrihalogenid-Komplexes der Formel $TiY_3 \cdot nZ$-OH, worin stehen Y für Chlor oder Brom, n für eine Zahl von 1 bis 6 und Z für einen einwertigen, nicht mehr als 10 Kohlenstoffatome aufweisenden Kohlenwasserstoffrest gesättigt-aliphatischer oder teils gesättigt-aliphatischer, teils aromatischer Natur, sowie

(IIc) 1 bis 200 Gew.-Teilen einer Verbindung des Typs BXnYmRp oder SiXnYmRq, worin X steht für einen Rest OR, Y für Chlor, Brom oder Wasserstoff und R für einen $C_1$- bis $C_{18}$-Kohlenwasserstoffrest mit der Maßgabe, daß n > 0 und n+m+p = 3 oder n+m+g = 4 sein soll,

miteinander in Berührung bringt unter Bildung einer Suspension (III), mit der Maßgabe, daß das Gewichtsverhältnis anorganisch-oxidischer Stoff (I) : Übergangsmetall-Komposition (IIb) im Bereich von 1 : 0,01 bis 1 : 2 liegt, die Suspension (III) bei einer Temperatur, die unterhalb von 200°C und oberhalb des Schmelzpunkts des verwendeten Oxakohlenwasserstoffs (IIa) liegt, bis zur trockenen Konsistenz unter Bildung eines festphasigen Zwischenprodukts (IV) eindampft, und

(1.2) dann

(1.2.1) das aus Stufe (1.1) erhaltene festphasige Zwischenprodukt (IV) und

(1.2.2) eine in einem organischen Lösungsmittel gelöste Aluminiumverbindung (V) der Formel $AlR_mX_{3-m}$, worin stehen

X für einen Rest OR, Chlor, Brom bzw. Wasserstoff,

R für einen $C_1$- bis $C_{18}$-Kohlenwasserstoffrest, und

m für eine Zahl von 1 bis 3,

miteinander in Berührung bringt unter Bildung einer Suspension, mit der Maßgabe, daß das Gewichtsverhältnis festphasiges Zwischenprodukt (IV) : Aluminiumverbindung (V) im Bereich von 1 : 0,05 bis 1 : 2 liegt, wobei das als Suspendiertes resultierende festphasige Produkt (VI) die Übergangsmetall-Katalysatorkomponente (I) ist.

2. Verfahren nach Anspruch 1, dadurch gekennzeichnet, daß gemäß (IIc) eine Verbindung des Typs SiXnRq eingesetzt wird, worin x steht für einen Rest OR und R für einen $C_1$- bis $C_{18}$-Kohlenwasserstoffrest aliphatischer oder aromatischer Natur, wobei n > 0 und n + q = 4 sein soll.

**Claims**

1. A process for the preparation of homopolymers of ethene and copolymers of ethene with minor amounts of $C_3$-$C_8$-$\alpha$-monoolefins by polymerization of the monomer or monomers at from 30 to 200°C and under from 0.1 to 200 bar using a Ziegler catalyst system consisting of

   (1) a transition metal catalyst component and

   (2) an organoaluminum catalyst component of the formula $AlR_mX_{3-m}$, where X is a radical OR, chlorine, bromine or hydrogen, R is a $C_1$-$C_{18}$-hydrocarbon radical and m is from 1 to 3, and

   (3) an organohalogen catalyst component

   with the provisos that the atomic ratio of transition metal from catalyst component (1) to aluminum from catalyst component (2) is from 1 : 0.1 to 1 : 500, and the molar ratio of organoaluminum catalyst component (2) to organohalogen catalyst component (3) is from 1 : 0.0001 to 1 : 10,

   wherein the transition metal catalyst component (1) used is the solid-phase product (VI) which has been obtained by a method in which

   (1.1) first

   (1.1.1) a finely divided, porous, inorganic oxidic substance (I) which has a particle diameter of from 1 to 1,000 $\mu$m, a pore volume of from 0.3 to 3 $cm^3/g$ and a specific surface area of from 100 to 1,000 $m^2/g$ and is of the formula $SiO_2.aAl_2O_3$, where a is from 0 to 2, and

   (1.1.2) a solution (II) as obtained on combining

   (IIa) 100 parts by weight of a saturated aliphatic or partly saturated aliphatic and partly aromatic oxahydrocarbon which has 1 or 2 oxaoxygen atoms and more than 3 but less than 19 carbon atoms and

   (IIb) from 0.01 to 50 parts by weight of a mixture of

   (IIb1) 100 molar parts of a vanadium trihalide/alcohol complex of the formula $VY_3.nZ$-OH, where Y is chlorine or bromine, n is from 1 to 6 and Z is a monovalent saturated aliphatic or partly saturated aliphatic and partly aromatic hydrocarbon radical of not more than 10 carbon atoms,

   (IIb2) from 0.2 to 200 molar parts of a titanium trihalide, where halogen may be chlorine and/or bromine, or a titanium trihalide complex of the formula $TiY_3.nZ$-OH, where Y is chlorine or bromine, n is from 1 to 6 and Z is a monovalent saturated aliphatic or partly saturated aliphatic and partly aromatic hydrocarbon radical of not more than 10 carbon atoms, and

   (IIc) from 1 to 200 parts by weight of a compound of the type BXnYmRp or SiXnYmRq, where X is a radical OR, Y is chlorine, bromine or hydrogen and R is a $C_1$-$C_{18}$-hydrocarbon radical, with the proviso that n > 0 and n + m + p = 3 or n + m + q = 4, are brought into contact with one another with formation of a suspension (III), with the proviso that the weight ratio of inorganic oxidic substance (I) to transition metal composition (IIb) is from 1 : 0.01 to 1 : 2, the suspension (III) is evaporated to dryness at a temperature which is below 200°C and above the melting point of the oxahydrocarbon (IIa) used, with formation of a solid-phase intermediate (IV), and

   (1.2) then

   (1.2.1) the solid-phase intermediate (IV) obtained from stage (1.1) and

   (1.2.2) an aluminum compound (V) which is dissolved in an organic solvent and is of the formula $AlR_mX_{3-m}$, where X is a radical OR, chlorine, bromine or hydrogen, R is a $C_1$-$C_{18}$-hydrocarbon radical and m is from 1 to 3, are brought into contact with one another with formation of a suspension, with the proviso that the weight ratio of solid-phase intermediate (IV) to aluminum compound (V) is from 1 : 0.05 to 1 : 2, the solid-phase product (VI) formed as the suspended substance being the transition metal catalyst component (I).

10

**2.** A process as claimed in claim 1, wherein the compound used for (IIc) is a compound of the type SixnRq, where X is a radical OR, R is an aliphatic or aromatic $C_1$-$C_{18}$-hydrocarbon radical, n should be > 0 and n + q should equal 4.

**Revendications**

**1.** Procédé de préparation d'homopolymères de l'éthylène ainsi que de copolymères de l'éthylène avec de faibles quantités d'$\alpha$-monooléfines en $C_3$-$C_8$ par polymérisation du ou des monomères à des températures de 30 à 200°C et des pressions de 0,1 à 200 bar, à l'aide d'un système catalytique de Ziegler formé de

(1) un composant de catalyseur contenant un métal de transition et

(2) un composant de catalyseur organoaluminique de formule $AlR_mX_{3-m}$, dans laquelle

X est mis pour un radical OR, chloro, bromo ou hydrogène,

R est mis pour un radical hydrocarboné en $C_1$-$C_{18}$ et

m est mis pour un nombre de 1 à 3,

et

(3) un composant de catalyseur organohalogéné

pourvu que le rapport atomique du métal de transition provenant du composant de catalyseur (1) à l'aluminium provenant du composant de catalyseur (2) soit compris entre 1:0,1 et 1:500 et que le rapport molaire du composant de catalyseur organoaluminique (2) au composant de catalyseur organohalogéné (3) soit compris entre 1:0,0001 et 1:10,

caractérisé en ce qu'on fait réagir

comme composant de catalyseur contenant un métal de transition (1), le produit solide (VI) qui a été obtenu de la manière suivante

(1.1) d'abord on met en contact avec formation d'une suspension (III)

(1.1.1) une substance inorganique-oxydée (I) poreuse et finement divisée qui a un diamètre de particules de 1 à 1 000 $\mu$m, un volume de pores de 0,3 à 3 $cm^3$/g ainsi qu'une surface spécifique de 100 à 1 000 $m^2$/g et qui a la formule $SiO_2.aAl_2O_3$ où a est mis pour un nombre compris entre 0 et 2, et

(1.1.2) une solution (II), telle qu'elle résulte de la mise en présence de

(IIa) 100 parties en poids d'un oxahydrocarbure de nature totalement aliphatique ou de nature partiellement aliphatique saturée, partiellement aromatique qui contient de 1 à 2 atomes d'oxygène ainsi que plus de 3 mais moins de 19 atomes de carbone, et

(IIb) 0,01 à 50 parties en poids d'un mélange de

(IIb1) 100 parties molaires d'un complexe trihalogénure de vanadium/alcool de formule $VY_3.nZ-OH$, où Y est mis pour le chlore ou le brome, n pour un nombre de 1 à 6 et Z pour un reste hydrocarboné monovalent ne présentant pas plus de 10 atomes de carbone de nature totalement aliphatique ou partiellement aliphatique saturée, partiellement aromatique,

(IIb2) 0,2 à 200 parties molaires d'un trihalogénure de titane, dans lequel l'halogène peut être le chlore et/ou le brome, ou d'un complexe de trihalogénure de titane de formule $TiY_3.nZ-OH$ où Y est mis pour le chlore ou le brome, n pour un nombre de 1 à 6 et Z pour un reste hydrocarboné monovalent ne présentant pas plus de 10 atomes de carbone de nature totalement aliphatique ou de nature partiellement aliphatique saturée, partiellement aromatique, ainsi que

(IIc) 1 à 200 parties en poids d'un composé du type BXnYmRp ou SiXnYmRq où X est mis pour un reste OR, Y pour un atome de chlore, de brome ou d'hydrogène et R pour un reste hydrocarboné en $C_1$-$C_{18}$, pourvu que n soit > 0 et n+m+p = 3 ou n+m+q = 4,

pourvu que le rapport pondéral de la substance inorganique-oxydée (I) au composant contenant un métal de transition (IIb) soit compris entre 1:0,01 et 1:2,

on évapore la suspension (III) à une température qui est inférieure à 200°C et supérieure au point de fusion de l'oxahydrocarbure utilisé (IIa), jusqu'à consistance sèche avec formation d'un produit intermédiaire solide (IV),

(1.2) puis on met en présence avec formation d'une suspension

(1.2.1) le produit intermédiaire (IV) en phase solide obtenu dans l'étape (1.1) et

(1.2.2) un composé d'aluminium (V), dissous dans un solvant organique de formule $AlR_mX_{3-m}$, dans laquelle

X est mis pour un radical OR, chloro, bromo ou hydrogène,

R est mis pour un radical hydrocarboné en $C_1$-$C_{18}$ et

11

m est pour pour un nombre de 1 à 3,

pourvu que le rapport pondéral du produit intermédiaire solide (IV) au composé d'aluminium (V) soit compris entre 1:0,05 et 1:2, le composant de catalyseur contenant un métal de transition (I) étant le produit (VI) solide résultant obtenu comme produit mis en suspension.

2. Procédé selon la revendication 1, caractérisé en ce que, en (IIc), on utilise un composé du type SiXnRq où X est mis pour un reste OR et R est mis pour un radical hydrocarboné en $C_1$-$C_{18}$ de nature aliphatique ou aromatique, avec n > 0 et n + q = 4.